# EUROPÄISCHE PATENTSCHRIFT

(11) **EP 0 599 101 B1**
(45) Veröffentlichungstag und Bekanntmachung des Hinweises auf die Patenterteilung: **03.04.1996**
(21) Anmeldenummer: 93117745.5
(22) Anmeldetag: 02.11.1993
(51) Int. Cl.: D06N 7/00, A47G 27/02, B32B 27/36, B32B 7/12, B32B 5/26, C09J 167/02

(54) **Wiederverwertbarer Teppichboden**
Recyclable floor covering
Moquette recyclable

(30) Priorität: 04.11.1992 DE 4237199
(43) Veröffentlichungstag der Anmeldung: 01.06.1994
(73) Patentinhaber: HOECHST AKTIENGESELLSCHAFT, D-65929 Frankfurt am Main (DE)
(72) Erfinder: Schwarz, Gerhard, D-63456 Hanau (DE); Weber, Manfred, D-61479 Glashütten (DE)

(56) Entgegenhaltungen:
- EP-A- 0 511 469
- EP-A- 0 529 575
- EP-A- 0 536 670
- EP-A- 0 547 533
- WO-A-93/12285
- GB-A- 1 455 091
- GB-A- 2 097 005
- US-A- 3 941 904

## Beschreibung

Die vorliegende Erfindung betrifft einen recyclisierbaren Teppichboden aus einem Trägermaterial, einem darin eingebundenen Polgam und einer Rückenausrüstung, wobei das Polgarn und das Trägermaterial aus normal oder schwerentflammbaren Polyesterfasern und die Rückenausrüstung aus einem Polyestergemisch besteht.

Teppiche im Sinne der vorliegenden Erfindung sind nach verschiedenen Herstellungsverfahren von Hand oder maschinell hergestellte textile Flächengebilde, die aus einem Träger - auch Grundgewebe genannt - und einer für den Gebrauch wichtigen Polschicht bestehen und die überwiegend als Fußbodenbelag eingesetzt werden. Der Träger der Teppiche besteht aus einem vliesartigen, gewebeartigen oder gewirkeartigen Flächengebilde, in das Büschel oder Schlingen von Polgarnen eingebunden sind, die sich einseitig senkrecht über der Ebene des Trägermaterials erheben. Je nach der Art der Herstellung und der daraus resultierenden unterschiedlichen Art der Einbindung der Polgarne in den Träger, werden verschiedene Teppicharten unterschieden, z.B. Knüpfteppiche, die manuell oder maschinell hergestellt werden können, handgewebte oder maschinengewebte Teppiche, gewirkte Teppiche, z.B. Raschel- oder Kettwirk-Teppiche, getuftete Teppiche und Nadelvlieskonstruktionen. Allen diesen Teppichkonstruktionen ist gemeinsam, daß die Polfäden in den Träger - den sogenannten Teppichgrund - eingebunden sind und ihn durchsetzen, d.h. daß die Polgarne mit den Garnen des Trägers in einer aus der Herstellung resultierenden Gesetzmäßigkeit verschlungen sind. Diese Einbindung der Polgarne in den Träger führt zwar bereits zu einer Verankerung des Polmaterials im Träger, die aber in der Regel nicht ausreicht, um dem Teppichboden, die für den Dauergebrauch erforderliche Festigkeit, insbesondere die sogenannte Noppenfestigkeit, die den Widerstand der Polgarne gegen Herausziehen aus dem Träger kennzeichnet, zu gewährleisten. Es ist daher üblich, die genannten Teppichmaterialien von der Trägerseite her auszurüsten und/oder mit einer Rückenbeschichtung zu versehen, um die Gebrauchseigenschaften des Teppichs, insbesondere die Noppenfestigkeit, aber auch den Warengriff, den Notwendigkeiten des Dauergebrauchs und den Erwartungen des Anwenders anzupassen.

Die Rückenbeschichtung dieser bekannten Teppiche erfolgt in der Regel durch einen Vorstrich mit geeigneten bekannten Latices, an den sich direkt entweder die Aufkaschierung eines Zweitrückens oder, nach einer Zwischentrocknung, eine Hauptbeschichtung, vorzugsweise ein Beschichtung mit einem geschäumten Latex anschließt.

Bekannte Teppichkonstruktionen enthatten, wie oben dargelegt, in der Regel für Pol, Träger und Beschichtung chemisch unterschiedliche Substanzgruppen. Sie sind daher nicht "artenrein" und können nicht oder nur nach umständlichen Trennoperationen recyclisiert werden.

Inzwischen ist aber die Entsorgung und das Recycling von Kunststoffteilen inbesondere im Automobilbereich zu einem zentralen Thema geworden. Viele Konzepte zur Wiederaufbereitung und Wiederverwertung von Kunststoffabfällen wurden bereits entwickelt. Probleme bereitet jedoch das Recyclisieren von Verbundsystemen, wie z.B. von Synthesefaser-Teppichen, bei denen die Einzelkomponenten aus unterschiedlichen Polymeren bestehen. Unter diesem Aspekt wurden deshalb Konstruktionen angestrebt, die vollständig aus der gleichen Werkstoffsorte bestehen.

Die Einschränkung auf eine einzige Werkstoffsorte führte jedoch in vielen Fällen zu einer Einschränkung der realisierbaren Kombination technischer Daten der daraus hergestellten Materialien.

Die vorliegende Erfindung betrifft nun einen recyclisierbaren Teppichboden mit hohem Gebrauchswert durch ausgezeichnete Dimensionsstabilität, hohe Noppenfestigkeit durch verbesserte Einbindung des Flors und vorteilhaften Warengriff. Er zeichnet sich ferner aus durch Schmutzunempfindlichkeit bzw. gute Reinigungsfähigkeit, hohe Abriebfestigkeit, hohe Lichtechtheit durch Einsatz entsprechender Farbstoffe und Färberichtlinien, sowie durch gute Naß- und Trockenreibechtheit und damit verlängerte Austauschzeiten. Bei geeigneter, unten beschriebener Trägerkonstruktion weist der erfindungsgemäße Teppich eine verbesserte Tiefziehbarkeit auf.

Beim Austausch des Teppichbodens ergeben sich keine Probleme denn der Teppich ist aufgrund seines Aufbaus aus artreinem Polyestermaterial einwandfrei recyclisierbar. Die Recyclisierung kann beispielsweise durch Methanolyse oder durch Regranulierung ausgeführt werden. Bei der Methanolyse werden - ggf. nach Abtrennung von Zusatzstoffen, wie z.B. Füll-, Mattierungs- und Farbstoffen - die zur Herstellung der Polyester erforderlichen monomeren Ausgangsmaterialien, nämlich die Methylester der Dicarbonsäurebausteine und die Diolkomponenten erhalten, destillativ getrennt und anschließend wieder zu neuen Polyestern kondensiert. Die Regranulierung führt in einem Schritt direkt zu einem wiederverspinnbaren Polyestermaterial.

Der erfindungsgemäße recyclisierbare Teppichboden besteht aus einem Trägermaterial, einem darin eingebundenen Polgarn und einer Rückenausrüstung und ist dadurch gekennzeichnet, daß das Polgarn, das Trägermaterial und ggf. der Zweitrücken aus Polyesterfasern bestehen, und daß er zur Rückenausrüstung und ggf. zur Verklebung mit dem Zweitrücken ein Verfestigungs- und Verklebungsmittel enthält, bestehend aus einer Kombination von (fest auf fest gerechnet)

10-70 Gew.-%, vorzugsweise 15 - 30 Gew.-% eines in Wasser löslichen oder dispergierbaren ersten Polyesters A und
90-30 Gew.-%, vorzugsweise 85 - 70 Gew.-% eines in Wasser unlöslichen zweiten Polyesters B enthält,
wobei
der in Wasser lösliche oder dispergierbare Polyester A
der Formel I entspricht, 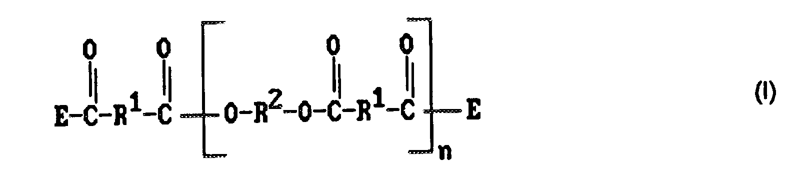 worin R¹ im statistischen Mittel
zu 25-90 Mol% aus o-,m- oder p-Phenylen, vorzugsweise m- oder p-Phenylen,
zu 10-25-Mol% aus Gruppen der Formeln II oder III, 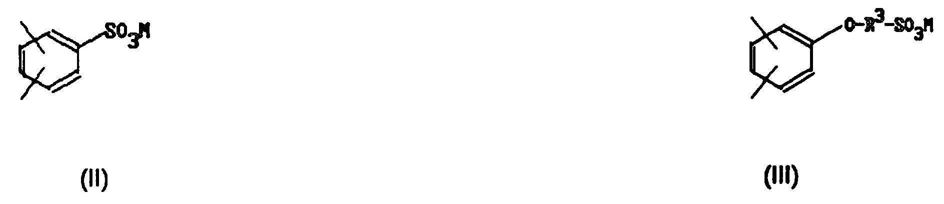 in der R³ o-, m- oder p-Phenylen oder geradkettiges oder verzweigtes Alkylen mit 2-6, vorzugsweise 2-4, insbesondere 3, C-Atomen ist,
und zu 0-50 Mol% aus geradkettigem oder verzweigten Alkylen mit 1-6, vorzugsweise 3-6, C-Atomen und/oder Cyclohexylenresten besteht,
R im statistischen Mittel zu 50-100 Mol% aus Resten der Formel IV, 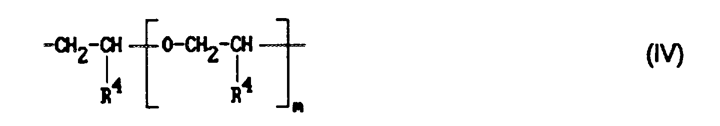 worin R⁴ Wasserstoff oder Methyl und m die Zahlen 1 oder 2 bedeutet,
zu 0-50 Mol% aus Alkylenresten mit 2-6 C-Atomen und
zu 0-20 Mol% aus Polyoxyalkylenresten der Formel IV, worin R⁴ Wasserstoff oder Methyl und m eine Zahl entsprechend einem mittleren Molekulargewicht des Polyoxyalkylenrestes bis 2000 bedeutet, bestehen,
E Hydroxy, Alkoxy mit 1-4 C-Atomen oder den Rest -O-R-OH und
M Wasserstoff oder ein Lithium-, Natrium- oder Kaliumatom oder eine Ammoniumgruppe bedeutet und
n so groß ist, daß das scheinbare mittlere Molekulargewicht, gemessen im Dampfdruckosmometer in Dimethylformamid als Lösemittel eine Größe von 1000 bis 12000, vorzugsweise von 1000 bis 5000 hat,
und
der in Wasser unlösliche Polyester B der Formel V entspricht, 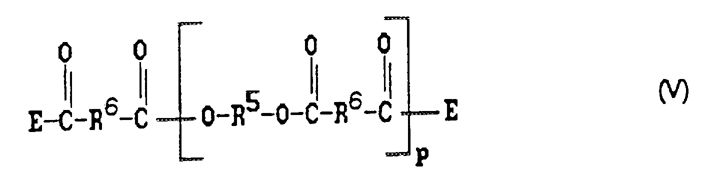 worin R⁶ im statistischen Mittel zu 50-100 Mol% aus o-,m- oder p-Phenylen, vorzugsweise m- oder p-Phenylen,
und zu 0-50 Mol% aus geradkettigem oder verzweigtem Alkylen mit 1-6, vorzugsweise 3-6, C-Atomen und/oder Cyclohexylenresten besteht,
R⁵ im statistischen Mittel zu 30-100 Mol% aus Resten der Formel VI, 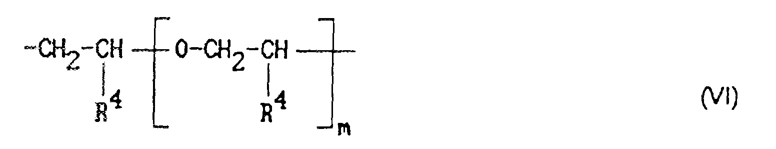 worin R⁴ Wasserstoff oder Methyl und m die Zahlen 1 oder 2 bedeutet,
und zu 0-70 Mol% aus Alkylenresten mit 2-6 C-Atomen und/oder Resten der Formel VII 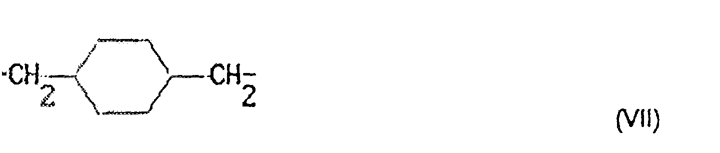 zu 0-20 Mol% aus Polyoxyalkylenresten der Formel IV, worin R⁴ Wasserstoff oder Methyl und m eine Zahl entsprechend einem mittleren Molekulargewicht des Polyoxyalkylenrestes bis 2000 bedeutet, bestehen,
E Hydroxy, Alkoxy mit 1-4 C-Atomen oder den Rest -O-R-OH bedeutet und
p so groß ist, daß der zweite Polyester einen Schmelzindex von 110-130°C hat.

Wie oben angegeben, stehen die Symbole R¹ bis R⁵ jeweils für eine kleine Anzahl verschiedener Baugruppen. Das bedeutet, daß in den Formeln I bis IV, in denen diese Symbole verwendet werden, jeweils anstelle eines dieser Symbole eine Baugruppe aus der angegebenen Definition steht. Da es sich bei den durch die Formeln I bis IV definierten Verbindungen um größere Moleküle handelt, in denen diese Symbole mehrfach vorkommen, kann jeweils anstelle des Symbols die gleiche Baugruppe stehen, oder die Symbole können verschiedene Reste aus der angegebenen Definition bedeuten. Dies sei an einem Beispiel näher erläutert: Enthält beispielsweise ein Polyester A 60 Mol% o-, m- oder p-Phenylen-Reste so kann er z.B. n Mol% m-Phenylenreste und (60-n) Mol% p-Phenylenreste enthalten.

Alkylenreste im Sinne dieser Erfindung sind zweiwertige Reste von geradkettigen oder verzweigten Alkanen, wobei die beiden freien Bindungen nicht am gleiche Kohlenstoffatom stehen. Vorzugsweise stehen die Bindungen entweder an benachbarten Kolenstoffatomen oder an der enständigen Kohlenstoffatomen der Alkankette, bei verzweigten Ketten dementsprechend an den Endgliedern der längsten durchgehenden Kette.

Besonders bevorzugt als wasserlöslicher oder in Wasser leicht dispergierbarer Polyester A ist ein solcher, in dem R¹ m- und/oder p-Phenylen und 5-Sulfo-penylen-1,3 und R Ethylen, ein Rest der Formel IV mit R⁴= Wasserstoff und m=1 und/oder 2,2-Dimethylpropylen-1,3.

Ein als wasserlöslicher oder in Wasser leicht dispergierbarer Polyester A geeignetes Handelsprodukt ist beispielsweise der als Schlichtemittel T 3513 von der Hoechst AG vertriebene Copolyester.

Eine besonders bevorzugte Baugruppe der Formel III ist eine solche, in der R³ für Propylem 1,3 steht.

Besonders bevorzugt als wasserunlöslicher Polyester B ist ein solcher, in dem R⁶ p-Phenylen und R⁵ Ethylen, ein Rest der Formel VII oder Polyoxyethylen bedeutet.

Wie bereits oben beschrieben, kann der Träger bei Web- und Raschelkettwirkteppichen als eine Grundkettschußkonstruktion aufgebaut sein, oder er kann bei Tufting-Teppichen und Nadelvlieskonstruktionen als ein eigenständiges Gewebe, Spunbond oder Vliesprodukt in die Gesamtkonstruktion eingebaut werden.

Besteht der Träger aus einem Gewebe oder einem gewebeanalogen Konstrukt, so weist er zweckmäßigerweise etwa 60 bis 150 Kettfäden und 80 bis 165 Schußfäden pro 10cm auf. Andere Trägerkonstruktionen haben vorzugsweise eine entsprechende Fadendichte.

Ein als Gewebe oder Maschenware ausgebildeter Träger besteht aus Stapel- oder Endlosfasergarnen mit Garnstärken von Nm 6 bis Nm 20, vorzugsweise Nm 12 bis Nm 14. Für die Garne werden Fasern mit einem Titer von 2 bis 30 dtex, vorzugsweise 3 bis 8 dtex, und einer Stapellänge von 80 bis 150 mm verwendet. Bei Endlosgarnen liegt die Garnstärke und die Einzeltiter im gleichen Bereich wie bei Stapelfasergarne.

Besonders bevorzugt sind erfindungsgemäße recyclisierbare Teppiche mit Tuftingkonstruktion, in denen der Träger ein Polyester-Vliesstoff oder ein Polyester-Gewebe, vorzugsweise mit einem Flächengewicht von 80 bis 200 g/m ist.

Die Gewichtsanteile von Polmaterial, Träger und Ausrüstungsmittel des erfindungsgemäßen recyclisierbaren Teppichbodens betragen etwa 150 bis 2000 g/m, vorzugsweise 400 bis 600 g/m Polmaterial, 80 bis 200 g/m Träger und 20 bis 800 g/m, vorzugsweise 200 bis 400 g/m Verfestigungs-und Verklebungsmittel.

Als Zweitrücken, der ggf. auf den erfindungsgemäßen Teppich aufkaschiert sein kann, dient vorzugsweise ein Polyester-Vliesstoff mit einem Flächengewicht von 20 bis 450 g/m, insbesondere ein durch Nadeln, thermisch-autogen oder Schmelzkleber verfestigter Vliesstoff aus Stapel- oder Endlosfasern mit einem Titer von 2 bis 30 dtex, vorzugsweise 3,0 bis 8,0 dtex, wie z.B. ein Spunbond.

Ein als Zweitrücken gut geeigneter Vliesstoff ist beispielsweise die handelsübliche Spunbond-Type 001 der Firma Hoechst AG.

Dient das Verfestigungs-und Verklebungsmittel gleichzeitig zur Verklebung des Teppichs mit einem Zweitrücken so wird zweckmäßigerweise eine Auftragsmenge im oberen Teil des oben angegebenen Bereichs eingesetzt. Im übrigen wählt der Fachmann die Auftragsmenge im Rahmen der obigen Grenzen nach den gewünschten Eigenschaften des Teppichs. Für ein eher textiles Material wird eine geringe Menge, für ein stark versteiftes eine größere Auftragsmenge eingesetzt.

Als Polyestergrundstoff, aus dem die Stapel- oder Endlosfasergarne von Pol und Träger des erfindungsgemäßen recyclisierbaren Teppichs sowie die Filamente der eventuell darin enthaltenen Vliesstoffe bestehen, kommen im Prinzip alle zur Faserherstellung geeigneten bekannten Typen in Betracht. Derartige geeignete Polyester bestehen überwiegend, d.h. zu mehr als 75 mol%, aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2-4 C-Atome, wobei das Ethylenglycol besonders geeignet ist.

Besonders vorteilhaft sind erfindungsgemäße Teppiche, deren Fasern aus einem Polyestermaterial bestehen, das zu mindestens 85 mol% aus Polyethylenterephthalat besteht. Die restlichen maximal 15 mol% bestehen aus Dicarbonsäureeinheiten und Glycoleinheiten, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure, Sulfogruppen enthaltende Dicarbonsäuren, wie z.B. 5-Sulfoisophthalsäure, die dem Polyester eine Affinität zu kationischen Farbstoffen vermitteln, und die flammhemmenden Co-Monomeren der Formel VIII: 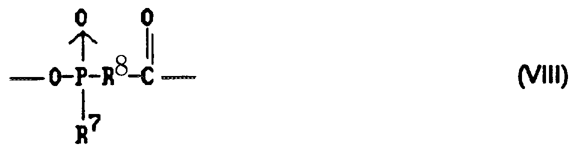 worin R⁸ Alkylen oder Polymethylen mit 2 bis 6 C-Atomen oder Phenyl und R⁷ Alkyl mit 1 bis 6 C-Atomen, Aryl oder Aralkyl bedeutet, einkondensiert enthalten. Vorzugsweise bedeuten in der Formel VIII R⁸ Ethylen und R⁷ Methyl, Ethyl, Phenyl, oder o-, m- oder p-Methyl-phenyl, insbesondere Methyl.

Eine besonders bevorzugte modifizierend wirkende aliphatische Dicarbonsäure ist Adipinsäure.

Bevorzugte, modifizierungswirksame Zusatzmengen der aliphatischen Dicarbonsäure liegen im Bereich von 5-10 Gew.%.

Ist eine wirksame Flammschutzwirkung gewünscht, so beträgt die dem Faserrohstoff bzw. Fasern zugesetzte Menge an flammfestmachenden Mitteln der Formel VIII 0,1 bis 20 Gew.-%, vorzugsweise 2,5 bis 12 Gew.-%, bezogen auf das Gesamtgewicht der Fasern bzw. der Fäden.

Beispiele für modifizierend wirkende Diolreste sind Reste von längerkettigen Diolen, z.B. von Propandiol, Dimethylpropandiol oder Butandiol, von Di- oder Tri-ethylenglycol oder, sofern in geringer Menge vorhanden, von Polyglycol mit einem Molgewicht von ca. 500 - 2000.

Bevorzugt für die Polyestergarne des Teppichs und für die tragenden Filamente von darin enthaltenen Vliesstoffen sind unmodifiziertes Polyethylenterephthalat, während als Schmelzbinder, die zur Verfestigung der Vliesstoffe, bevorzugt in Form von Bindefasern, eingesetzt werden, Polyester mit abgesenktem Schmelzpunkt dienen.

Diese bestehen zweckmäßigerweise aus modifiziertem Polyethylenterephthalat, beispielsweise polyethylenglykol-modifiziertem Polyethylenterephthalat oder aus Polybutylenterephthalat. Auch Filamente aus Polyethylenterephthalat, das mit dem oben genannten Co-Monomer der Formel VIII modifiziert ist, können mit Vorteil als Schmelzbindefaser eingesetzt werden.

Die in den Garnen der erfindungsgemäßen Teppiche enthaltenen Polyester haben vorzugsweise ein Molekulargewicht entsprechend einer intrinsischen Viskosität (IV), gemessen in einer Lösung von 1g Polymer in 100 ml Dichloressigsäure bei 25°C, von 0,7 bis 1,4.

Ein besonders bevorzugtes Teppichgarn, das mit besonderem Vorteil zur Herstellung des Pols und des Trägers des erfindungsgemäßen Teppichbodens eingesetzt werden kann, besteht beispielsweise aus einem Fasermaterial der Marke ®Trevira, insbesondere der Marke ®Trevira Type 824 der Firma Hoechst AG.

Ein Fasermaterial, das mit Phosphonsäuregruppen modifiziert ist und zur Herstellung flammhemmender Garne eingesetzt werden kann, wird unter dem Namen ®Trevira CS von der Firma Hoechst AG in den Handel gebracht.

Der erfindungsgemäße, recyclisierbare Teppichboden kann selbstverständlich auch coloriert z.B. einfarbig gefärbt oder gemustert sein.

Dabei kann es von Vorteil sein, den Farbton des Trägers dem des Flormaterials anzupassen, d.h. einen in dunkleren Tönen gefärbten Träger einzusetzen, wenn auch der Flor ein dunkleres Design aufweist. Die Colorierung des Teppichs kann dabei nach allen bekannten Verfahren erfolgen. So kann der Teppich beispielsweise in der Haspelkufe bei Kochtemperatur mit oder, vorzugsweise, ohne Carrierzusatz gefärbt werden, es kann eine Kontinue-Färbung erfolgen, es kann unter Druck nach dem HT-Verfahren gefärbt werden oder eine für Teppichfärbung geeignete Ausführungsform des Thermosol-Verfahrens eingesetzt werden.

Gemusterte Teppiche können erhalten werden durch Bedrucken, Besprühen oder anderweitigen örlichen Farbauftrag auf die Florseite des Teppichs und anschließende Fixierung des Farbstoffs. Die Fixierung der Farbstoffe erfolgt in Abhängigkeit von der Struktur der Farbstoffe und der Art des Polyesterrohstoffs der Fasern. Bei Polyestermaterialien, die Säuregruppen, z.B. Sulfonsäuregruppen, in der Polymerkette enthalten und Einsatz von kationischen Farbstoffen erfolgt die Fixierung bereits bei der Einwirkung einer heißen wässrigen Farbstoffzubereitung auf die Fasern, vermutlich durch Bindung der Farbstoffe an die Säuregruppen. Beim Einsatz von Dispersionsfarbstoffen und Polyestermaterialien, die keine Säuregruppen enthalten, erfolgt die Fixierung in der Regel durch eine Hitzebehandlung des mit der Farbstoffzubereitung in Kontakt gebrachten Färbegutes.

Die Herstellung colorierter Teppiche kann aber natürlich auch in der Weise erfolgen, daß man von vorgefärbten Pol- und/oder Trägergarnen ausgeht. Die Garnfärbung kann hierbei ebenfalls nach allen bekannten Methoden, insbesondere nach dem HT-Verfahren ausgeführt werden.Mit besonderem Vorteil können auch mit Pigmenten spinngefärbte Garne eingesetzt werden.

Die Recyclisierung der erfindungsgemäßen Teppiche durch Methanolyse wird durch eine Färbung des Polyestermaterials nicht oder nur unwesentlich beeinträchtigt. Eine Recyclisierung durch Regranulation führt bei colorierten Teppichen zu entsprechend gefärbtem Regranulat, das in Bereichen, in denen eine Färbung des Polymers keine Rolle spielt oder gar erwünscht ist, weiterverarbeitet werden kann.

Zur Erzielung besonderer Effekte kann der erfindungsgemäße Teppichboden im Flor und/oder im Träger Garne oder Filamente enthalten, die nicht aus Polyester bestehen, sofern diese in einer so geringen Menge vorhanden sind oder mit dem Polyestermaterial soweit kompatibel sind, daß sie die Recyclisierbarkeit des Teppichs nicht beeinträchtigen.

So ist es z.B. möglich, dem Flor- und/oder dem Trägergarn Kohlenstoffilamente beizumischen, um die elektrische Leitfähigkeit des Teppichs zu erhöhen.

Ein weiterer Gegenstand der vorliegenden Erfindung ist eine Zubereitung eines Verfestigungs- und Verklebungsmittels auf der Basis von Polyestern für die Rückenverfestigung von recyclisierbaren Polyesterteppichen und/oder zur Verklebung derselben mit einem Zweitrücken. Diese Zubereitung weist folgende Zusammensetzung auf:
10 bis 70 Gew.-Teile, vorzugsweise 15 bis 30 Gew.-Teile, eines in Wasser löslichen oder leicht dispergierbaren Polyesters A,
   GW Gew.-Teile Wasser, wobei GW sich aus der Formel GP·0.66 ≤ GW ≤ GP·5.0, worin GP die Menge in Gewichtsteilen des Polyesters A ist, ergibt,
   GL Gew.-Teile eines wassermischbaren organischen Lösungsmittels, wobei GL sich aus der Formel 0 ≤ GL ≤ 0.3·GP ergibt,
90 bis 30 Gew.-Teile, vorzugsweise 85 bis 70 Gew.-Teile, eines in Wasser unlöslichen Polyesters B,
und wobei die Polyester A und B die oben angegebenen Zusammensetzungen haben.

Wassermischbare organische Lösungsmittel, die in dieser Zubereitung enthalten sein können sind Alkanole oder Alkandiole mit 1 bis 8, vorzugsweise 4 bis 6 C-Atomen, wie z.B. Isobutanol oder 1,4-Butandiol, Di- oder Tri-ethylenglycol oder aprotische, lineare oder cyclische Säureamide wie Dimethylformamid, Dimethylacetamid oder N-Methylpyrrolidon.

Diese Zubereitung kann gewünschtenfalls in an sich bekannter Weise durch Zusatz geringer Mengen von bekannten Puffergemischen auf einen pH-Wert von 4 bis 7 eingestellt werden.

Zur Applikation der Zubereitung durch Sprühauftrag, durch Aufbürsten oder Aufschäumen, vorzugsweise aber durch Pflatschen mittels Pflatschwalzen auf den Teppichrücken wird die Viskosität der Zubereitung entweder durch Variation des Gewichtsverhältnisses der Polyester A und B oder durch Zusatz von bekannten Verdickern, wie z.B. von Alginaten oder Polyacrylsäurederivaten auf eine Viskosität von 500 bis 10000 mPa·s, vorzugsweise beim Auftrag durch Pflatschen auf 1500 bis 3000 mPa·s oder beim Auftrag durch Rakeln auf 6000 bis 8000 mPa·s, eingestellt.

Die Zubereitung kann aber auch, wenn sie durch Aufrakeln auf den Teppichboden aufgebracht werden soll, durch Zusatz beispielsweise der genannten Verdicker auf eine pastöse Konsistenz eingestellt werden. Hierzu werden in der Regel 0,5 bis 5,0 Gew.-%, bezogen auf das Gewicht der Zubereitung, Verdicker eingesetzt.

Zusätzlich kann die erfindungsgemäße Zubereitung noch übliche Zusätze, wie beispielsweise Antimigrationsmittel, Emulsionsstabilisatoren, Füllstoffe oder Pigmente und dergleichen in einem Anteil von bis zu 15, vorzugsweise bis zu 10 Gew.-% der Gesamtmischung enthalten.

Besonders bevorzugt sind solche Zubereitungen, die Polyester A und B enthalten, die eines oder mehrere der oben genannten, bevorzugten Merkmale aufweisen.

Ein weiterer Gegenstand dieser Erfindung ist die Verwendung der vorstehend beschriebenen Zubereitung zur Verfestigung von Teppichböden und ggf. zu deren Verklebung mit einem Zweitrücken.

Die vorliegende Erfindung betrifft auch ein Verfahren zur Herstellung eines recyclisierbaren Teppichbodens, wobei zunächst nach einem der bekannten Knüpf-, Web-, Kettwirk-, Tufting- oder Nadelvliesverfahren unter Einsatz von Polyestergarnen ein unverfestigter Teppichboden aus einem Träger und darin eingebundenen Polgarnen hergestellt, sofern eine Veloursware hergestellt werden soll, geschoren, gegebenenfalls wie üblich coloriert und anschließend gewaschen wird, um vorhandene Spinnavivagen zu entfernen, das dadurch gekennzeichnet ist, daß anschließend rückseitig durch Sprühauftrag, durch Aufbürsten oder Aufschäumen, gegebenenfalls unter Zusatz eines Schäumers zur Zubereitung, vorzugsweise aber durch Pflatschen mittels Pflatschwalzen oder Aufrakeln eine Verfestigungs-und Verklebungsmittel-Zubereitung aufgetragen wird, die folgende Zusammensetzung aufweist:
10 bis 70 Gew.-Teile, vorzugsweise 15 bis 30 Gew.-Teile, eines in Wasser löslichen oder leicht dispergierbaren Polyesters A,
   GW Gew.-Teile Wasser, wobei GW sich aus der Formel GP·0.66 ≤ GW ≤ GP·5.0, worin GP die Menge in Gewichtsteilen des Polyesters A ist, ergibt,
   GL Gew.-Teile eines wassermischbaren organischen Lösungsmittels, wobei GL sich aus der Formel 0 ≤ GL ≤ 0.3·GP ergibt,
90 bis 30 Gew.-Teile, vorzugsweise 85 bis 70 Gew.-Teile, eines in Wasser unlöslichen Polyesters B,
und wobei die Polyester A und B die oben angegebenen Zusammensetzungen haben.

Die Viskosität dieser Polyester-Zubereitung wird so eingestellt, daß eine gute Durchdringung des Teppichrückens erreicht wird. In der Regel ist dieses Ziel zu erreichen, wenn die Viskosität der Zubereitung bei der Arbeitstemperatur im Bereich von 500 bis 10000 mPa·s liegt. Der Auftrag der Polymerzubereitung erfolgt normalerweise bei Temperaturen von 5 bis 40°C, vorzugsweise bei Raumtemperatur. Die Auftragsmenge der Zubereitung wird so eingestellt, daß sich, bezogen auf Feststoff, eine Polyester-Auflage von 20 bis 800 g/m ergibt.

Nach dem Auftrag der Polyester-Zubereitung wird auf die Rückseite des Teppichs gegebenenfalls noch ein Zweitrücken aufgelegt und, beispielsweise durch Kalandrieren, angedrückt.

Anschließend wird der Teppich bei Temperaturen von 80 bis 140 °C getrocknet und das Polyesterharz der Polyesterzubereitung entweder beim Trocknen oder in einem daran anschließenden Wärmebehandlungsschritt bei 140-180 °C vollständig in den Teppichrücken eingebunden und dieser dabei endverfestigt.

Bei einer alternativen Ausführungsform des oben beschriebenen Verfahrens erfolgt der rückseitige Auftrag der Polyester A und B in separaten Schritten, wobei der Polyester A in Form einer Lösung oder Dispersion, der Polyester B in Pulverform aufgebracht wird. Bei dieser Ausführungsform wird, wie oben beschrieben, zunächst nach einem der bekannten Knüpf-, Web-, Kettwirk-, Tufting- oder Nadelvliesverfahren unter Einsatz von Polyestergarnen ein unverfestigter Teppichboden aus einem Träger und darin eingebundenen Polgarnen hergestellt, sofern eine Veloursware hergestellt werden soll, geschoren, gegebenenfalls wie üblich coloriert und anschließend gewaschen wird, um vorhandene Spinnavivagen zu entfernen. Anschließend wird jedoch rückseitig durch Sprühauftrag, durch Aufbürsten oder Aufschäumen, gegebenenfalls unter Zusatz eines Schäumers, vorzugsweise aber durch Pflatschen mittels Pflatschwalzen oder Aufrakeln, anstelle der oben beschriebenen Verfestigungs- und Verklebungsmittel-Zubereitung lediglich eine ggf. verdickte Lösung oder Dispersion aufgetragen, die folgende Zusammensetzung aufweist:
10 bis 70 Gew.-Teile, vorzugsweise 15 bis 39 Gew.-Teile, eines in Wasser löslichen oder leicht dispergierbaren Polyesters A,
   GW Gew.-Teile Wasser, wobei GW sich aus der Formel GP·0.66 ≤ GW ≤ GP·5.0, worin GP die Menge in Gewichtsteilen des Polyesters A ist, ergibt,
   GL Gew.Teile eines wassermischbaren organischen Lösungsmittels, wobei GL sich aus der Formel 0 ≤ GL ≤ 0.3·GP ergibt.

Die Auftragsmenge dieser Polyesterlösung wird so eingestellt, daß der Teppich mindestens 2 g/m, vorzugsweise mindestens 6 g/m, insbesondere 20 bis 560 g/m Polyester A (fest) enthält.

Danach wird auf die Rückseite des Teppichs gleichmäßig mit einem pulverisierten, in Wasser unlöslichen Polyester B bestreut, wobei die Auftragsmenge so bemessen wird, daß die Summe der pro m des Teppichs aufgebrachten Gewichtsmengen der Polyester A und B 20 bis 800 g beträgt und das Verhältnis der aufgebrachten Gewichtsmengen der Polyester A und B zwischen 1:9 und 9:1 liegt.
und wobei die Polyester A und B die oben angegebenen Zusammensetzungen haben.

Besonders bevorzugt sind solche Ausführungsformen der vorliegenden Erfindung, die eine Kombination mehrerer bevorzugter Merkmale aufweisen.

Das folgende Ausführungbeispiel veranschaulicht die Herstellung einer Verfestigungs-und Verklebungsmittel-Zubereitung und eines recyclisierbaren erfindungsgemäßen Teppichbodens.

### Beispiel

A) Herstellung der Verfestigungs-und Verklebungsmittel-Zubereitung.
   In 6,0 kg einer 25 Gew.-%igen Lösung eines Copolyesters aus Isophthalsäure, Sulfoisophthalsäure, Ethylenglycol und Diethylenglycol (Schlichtemittel T 3513 der Hoechst AG) werden unter Rühren mit einem Schnellrührer bei ca. 1500-2000 Touren/min 2,0 kg eines pulverförmigen Copolyesters aus Terephthalsäure, Ethylenglycol, Cyclohexandimethanol und Polyglycol (® PLATHERM M 1400 B der Firma Elf Atochem) und 640 g einer 30 gew.-%igen Verdickerlösung auf Basis von Polyacrylsäure (entsprechend ca. 2,3 Gew.-% fest bezogen auf die Mischung) eingerührt.
   Wenn eine völlig homogene Verteilung der Feststoffe in der wässrigen Mischung erreicht ist, wird durch Zugabe von 20 gew.-%iger wässriger Ammmoniaklösung der pH-Wert der Mischung auf 7,5 eingestellt.
   Dabei geht die wässrige Mischung in eine pastöse Form über.
B) Herstellung des recyclisierbaren Teppichs.
   Auf die Rückseite eines Tufting-Teppichs, bestehend aus einem durch Nadeln verfestigten Spunbond aus unmodifizierten Polyethylenterephthalat-Filamenten mit einem Flächengewicht von 120 g/m, in das ein flockegefärbtes Polgarn aus Polyethylenterephthalat (®Trevira der Firma Hoechst AG) so eingenadelt ist, daß eine Polhöhe von 6 mm entsteht und der Gewichtsanteil der Polfasern am rohen getufteten Material 900 g/m beträgt, wird mit einer Handrakel 350 g/m der gemäß Abschnitt A dieses Beispiels hergestellten Polyester-Paste aufgetragen.
   Anschließend wird auf den Teppichrücken ein Polyestervliesstoff mit einem Flächengewicht von 200 (Hoechst-Spunbond Type 001) aufgelegt und mittels Walze fest angedrückt.
   Danach wird der Aufbau 15 Minuten bei 120 °C getrocknet und dann 5 Minuten bei einer Temperatur von 160 °C endverfestigt.

Der so hergestellte Teppich kann durch Methanolyse oder durch Regranulation problemlos recyclisiert werden. Er erfüllt die heute üblichen Anforderungen bezüglich Maßstabilität, Lichtechtheit, Reibechtheit, Trocken- und Naßreinigungsfähigkeit und Thermostabilität.

Darüberhinaus ist der Teppich geruchsneutral und toxikologisch unbedenklich, er zeigt ein ansprechendes textiles Oberflächenbild und weist gute Wiedererholungswerte auf.

## Patentansprüche

1. Recyclisierbarer Teppichboden bestehend aus einem Trägermaterial, einem darin eingebundenen Polgarn einer Rückenausrüstung und ggf. einem mit dem Rücken verklebten Zweitrücken, dadurch gekennzeichnet, daß das Polgarn, das Trägermaterial und ggf. der Zweitrücken aus Polyesterfasern bestehen, und daß er zur Rückenausrüstung und ggf. zur Verklebung mit dem Zweitrücken ein Verfestigungs-und Verklebungsmittel enthält bestehend aus einer Kombination von
10-70 Gew.-% eines in Wasser löslichen oder dispergierbaren ersten Polyesters A und
90-30 Gew.-% eines in Wasser unlöslichen zweiten Polyesters B enthält,
wobei
der in Wasser lösliche oder dispergierbare Polyester A
der Formel I entspricht, 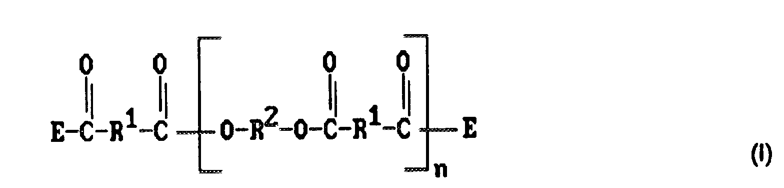 worin R¹ im statistischen Mittel
zu 25-90 Mol% aus o-,m- oder p-Phenylen, vorzugsweise m- oder p-Phenylen,
zu 10-25-Mol% aus Gruppen der Formeln II oder III, 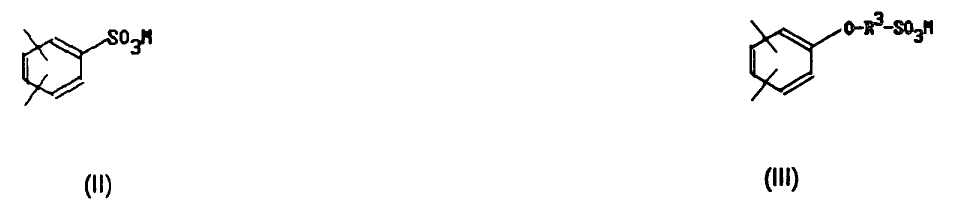 in der R³ o-, m- oder p-Phenylen oder geradkettiges oder verzweigtes Alkylen mit 2-6, vorzugsweise 2-4, insbesondere 3, C-Atomen ist,
und zu 0-50 Mol% aus geradkettigem oder verzweigten Alkylen mit 1-6, vorzugsweise 3-6, C-Atomen und/oder Cyclohexylenresten besteht,
R im statistischen Mittel zu 50-100 Mol% aus Resten der Formel IV, 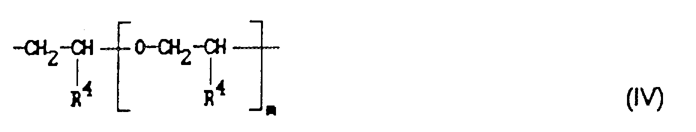 worin R⁴ Wasserstoff oder Methyl und m die Zahlen 1 oder 2 bedeutet,
zu 0-50 Mol% aus Alkylenresten mit 2-6 C-Atomen und
zu 0-20 Mol% aus Polyoxyalkylenresten der Formel IV, worin R⁴ Wasserstoff oder Methyl und m eine Zahl entsprechend einem mittleren Molekulargewicht des Polyoxyalkylenrestes bis 2000 bedeutet, bestehen,
E Hydroxy, Alkoxy mit 1-4 C-Atomen oder den Rest -O-R-OH und
M Wasserstoff oder ein Lithium-, Natrium- oder Kaliumatom oder eine Ammoniumgruppe bedeutet und
n so groß ist, daß das scheinbare mittlere Molekulargewicht, gemessen im Dampfdruckosmometer in Dimethylformamid als Lösemittel eine Größe von 1000 bis 12000, vorzugsweise von 1000 bis 5000 hat,
und
der in Wasser unlösliche Polyester B der Formel V entspricht, 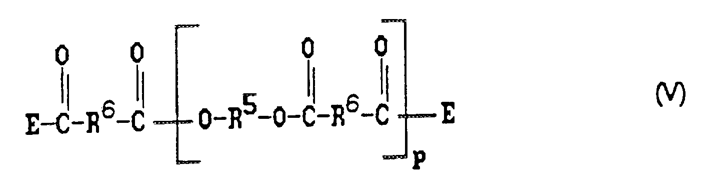 worin R⁶ im statistischen Mittel zu 50-100 Mol% aus o-,m- oder p-Phenylen, vorzugsweise m- oder p-Phenylen,
und zu 0-50 Mol% aus geradkettigem oder verzweigtem Alkylen mit 1-6, vorzugsweise 3-6, C-Atomen und/oder Cyclohexylenresten besteht,
R⁵ im statistischen Mittel zu 30-100 Mol% aus Resten der Formel VI, 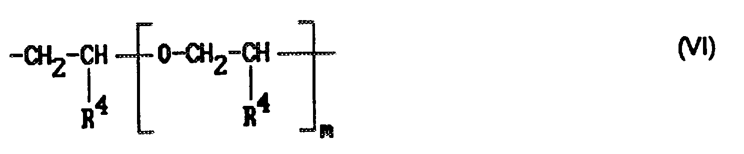 worin R⁴ Wasserstoff oder Methyl und m die Zahlen 1 oder 2 bedeutet,
und zu 0-70 Mol% aus Alkylenresten mit 2-6 C-Atomen und/oder Resten der Formel VII 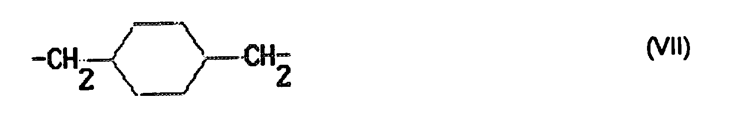 zu 0-20 Mol% aus Polyoxyalkylenresten der Formel IV, worin R⁴ Wasserstoff oder Methyl und m eine Zahl entsprechend einem mittleren Molekulargewicht des Polyoxyalkylenrestes bis 2000 bedeutet, bestehen,
E Hydroxy, Alkoxy mit 1-4 C-Atomen oder den Rest -O-R-OH bedeutet und
p so groß ist, daß der zweite Polyester einen Schmelzindex von 110-130°C hat.

2. Recyclisierbarer Teppichboden gemäß Anspruch 1, dadurch gekennzeichnet, daß er ein Verfestigungs- und Verklebungsmittel enthält, bestehend aus einer Kombination von
15 - 30 Gew.-% eines in Wasser löslichen oder dispergierbaren ersten Polyesters A und
85 - 70 Gew.-% eines in Wasser unlöslichen zweiten Polyesters B.

3. Recyclisierbarer Teppichboden gemäß mindestens einem der Ansprüche 1 und 2, dadurch gekennzeichnet, daß die Gewichtsanteile von Polmaterial, Träger und Verfestigungs- und Verklebungsmittel des Teppichbodens etwa 150 bis 2000 g/m Polmaterial, 80 bis 200 g/m Träger und 20 bis 800 gm Verfestigungs- und Verklebungsmittel betragen.

4. Recyclisierbarer Teppichboden gemäß mindestens einem der Ansprüche 1 bis 3, dadurch gekennzeichnet, daß der Träger eine Fadendichte entsprechend etwa 60 bis 150 Kettfäden und 80 bis 165 Schußfäden pro 10 cm aufweist.

5. Recyclisierbarer Teppichboden gemäß mindestens einem der Ansprüche 1 bis 4, dadurch gekennzeichnet, daß er eine
Tuftingkonstruktion aufweist, wobei der Träger ein Polyester-Vliesstoff oder ein Polyester-Gewebe, vorzugsweise mit einem Flächengewicht von 80 bis 200 g/m ist.

6. Recyclisierbarer Teppichboden gemäß mindestens einem der Ansprüche 1 bis 5, dadurch gekennzeichnet, daß er einen Zweitrücken aufweist, bestehend aus einem Polyester-Vliesstoff mit einem Flächengewicht von 20 bis 450 g/m, insbesondere einem durch Nadeln, thermisch-autogen oder Schmelzkleber verfestigten Vliesstoff aus Stapel- oder Endlosfasern mit einem Titer von 2,0 bis 30 dtex, vorzugsweise 3,0 bis 8,0 dtex, wie z.B. einem Spunbond.

7. Recyclisierbarer Teppichboden gemäß mindestens einem der Ansprüche 1 bis 6, dadurch gekennzeichnet, daß seine Fasern aus einem Polyestermaterial bestehen, das zu mindestens 85 mol% aus Polyethylenterephthalat besteht.

8. Zubereitung eines Verfestigungs- und Verklebungsmittels auf der Basis von Polyestern für die Rückenverfestigung von recyclisierbaren Polyesterteppichen und/oder zur Verklebung derselben mit einem Zweitrücken folgender Zusammensetzung:
10 bis 70 Gew.-Teile eines in Wasser löslichen oder leicht dispergierbaren Polyesters A,
GW Gew.-Teile Wasser, wobei GW sich aus der Formel GP·0.66 ≤ GW ≤ GP·5.0, worin GP die Menge in Gewichtsteilen des Polyesters A ist, ergibt,
GL Gew.-Teile eines wassermischbaren organischen Lösungsmittels, wobei GL sich aus der Formel 0 ≤ GL ≤ 0.3·GP ergibt,
90 bis 30 Gew.-Teile eines in Wasser unlöslichen Polyesters B,
und wobei die Polyester A und B die in Anspruch 1 angegebenen Zusammensetzungen haben.

9. Zubereitung gemäß Anspruch 8, dadurch gekennzeichnet, daß sie
15 bis 30 Gew.-Teile, eines in Wasser löslichen oder leicht dispergierbaren Polyesters A,
GW Gew.-Teile Wasser, wobei GW sich aus der Formel GP·0.66 ≤ GW ≤ GP·5.0, worin GP die Menge in Gewichtsteilen des Polyesters A ist, ergibt,
GL Gew.-Teile eines wassermischbaren organischen Lösungsmittels, wobei GL sich aus der Formel 0 ≤ GL ≤ 0.3·GP ergibt,
85 bis 70 Gew.-Teile eines in Wasser unlöslichen Polyesters B, enthält.

10. Verwendung der Zubereitung der Ansprüche 8 und 9 zur Verfestigung von Teppichböden und ggf. zur Verklebung mit einem Zweitrücken.

11. Verfahren zur Herstellung eines recyclisierbaren Teppichbodens, wobei zunächst nach einem der bekannten Knüpf-, Web-, Kettwirk-, Tufting- oder Nadelvliesverfahren unter Einsatz von Polyestergarnen ein unverfestigter Teppichboden aus einem Träger und darin eingebundenen Polgarnen hergestellt, sofern eine Veloursware hergestellt werden soll, geschoren, gegebenenfalls wie üblich coloriert und anschließend gewaschen wird, um vorhandene Spinnavivagen zu entfernen, dadurch gekennzeichnet, daß anschließend rückseitig durch Sprühauftrag, durch Aufbürsten oder Aufschäumen, gegebenenfalls unter Zusatz eines Schäumers zur Zubereitung, vorzugsweise aber durch Pflatschen mittels Pflatschwalzen oder Aufrakeln eine Verfestigungs-und Verklebungsmittel-Zubereitung aufgetragen wird, die folgende Zusammensetzung aufweist:
10 bis 70 Gew.-Teile eines in Wasser löslichen oder leicht dispergierbaren Polyesters A,
GW Gew.-Teile Wasser, wobei GW sich aus der Formel GP·0.66 ≤ GW ≤ GP·5.0, worin GP die Menge in Gewichtsteilen des Polyesters A ist, ergibt,
GL Gew.-Teile eines wassermischbaren organischen Lösungsmittels, wobei GL sich aus der Formel 0 ≤ GL ≤ 0.3·GP ergibt,
90 bis 30 Gew.-Teile eines in Wasser unlöslichen Polyesters B,
und wobei die Polyester A und B die in Anspruch 1 angegebenen Zusammensetzungen haben,
wobei die Auftragsmenge der Zubereitung wird so eingestellt wird, daß sich, bezogen auf Feststoff, eine Polyester-Auflage von 20 bis 800 g/m ergibt,
nach dem Auftrag der Polyester-Zubereitung auf die Rückseite des Teppichs gegebenenfalls noch ein Zweitrücken aufgelegt und, beispielsweise durch Kalandrieren, angedrückt wird und
anschließend der Teppich bei Temperaturen von 80 bis 140 °C getrocknet und das Polyesterharz der Polyesterzubereitung entweder beim Trocknen oder in einem daran anschließenden Wärmebehandlungsschritt bei 140-180 °C vollständig in den Teppichrücken eingebunden und dieser dabei endverfestigt wird.

12. Verfahren gemäß Anspruch 11, dadurch gekennzeichnet, daß eine Verfestigungs-und Verklebungsmittel-Zubereitung aufgetragen wird, die folgende Zusammensetzung aufweist:
15 bis 30 Gew.-Teile, eines in Wasser löslichen oder leicht dispergierbaren Polyesters A,
GW Gew.-Teile Wasser, wobei GW sich aus der Formel GP·0.66 ≤ GW ≤ GP·5.0, worin GP die Menge in Gewichtsteilen des Polyesters A ist, ergibt,
GL Gew.-Teile eines wassermischbaren organischen Lösungsmittels, wobei GL sich aus der Formel 0 ≤ GL ≤ 0.3·GP ergibt,
85 bis 70 Gew.-Teile eines in Wasser unlöslichen Polyesters B.

13. Verfahren gemäß mindestens einem der Ansprüche 11 und 12, dadurch gekennzeichnet, daß der rückseitige Auftrag der Polyester A und B in separaten Schritten erfolgt, wobei der Polyester A in Form einer Lösung oder Dispersion, der Polyester B in Pulverform aufgebracht wird.

## Claims

1. A recyclable carpet floor covering comprising a backing, a tied-in pile yarn and a back finish with or without a secondary backing adhered to the (primary) backing, wherein the pile yarn, the (primary) backing and a secondary backing comprise polyester fibers and the back finish for the (primary) backing and for adhering a secondary backing comprises consolidating and adhering composition comprising a combination of
10-70% by weight of a water-soluble or -dispersible first polyester A, and
90-30% by weight of a water-insoluble second polyester B,
wherein
the water-soluble or -dispersible polyester A conforms to the formula I 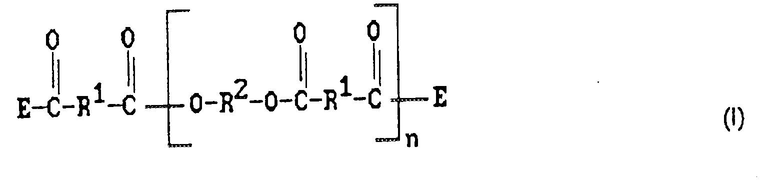 where R¹ is on average
25-90 mol% o-, m- or p-phenylene, preferably m- or p-phenylene,
10-25 mol% groups of the formulae II or III 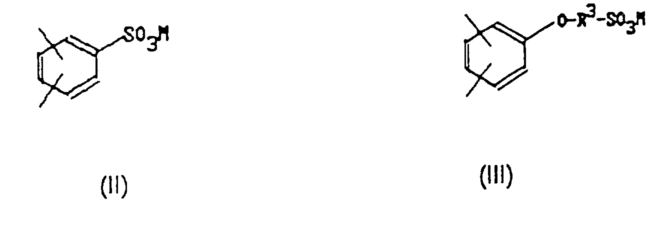 where R³ is o-, m- or p-phenylene or straight-chain or branched alkylene of 2-6, preferably 2-4, in particular 3, carbon atoms, and 0-50 mol% straight-chain or branched alkylene of 1-6, preferably 3-6, carbon atoms and/or cyclohexylene radicals,
R is on average 50-100 mol% radicals of the formula IV 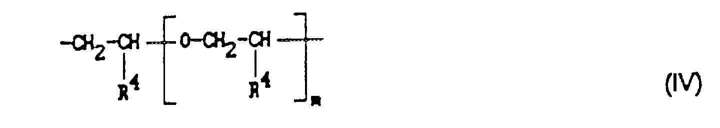 where R⁴ is hydrogen or methyl and m is 1 or 2,
0-50 mol% alkylene radicals of 2-6 carbon atoms, and 0-20 mol% polyoxyalkylene radicals of the formula IV where R⁴ is hydrogen or methyl and m is a number corresponding to an average molecular weight of the polyoxyalkylene radical of up to 2000,
E is hydroxyl, alkoxy of 1-4 carbon atoms or the radical -O-ROH,
M is hydrogen or a lithium, sodium or potassium atom or an ammonium group,
n is such that the apparent average molecular weight, measured in a vapor pressure osmometer in dimethylformamide as the solvent, is from 1000 to 12,000, preferably from 1000 to 5000,
and
the water-insoluble polyester B conforms to the formula V 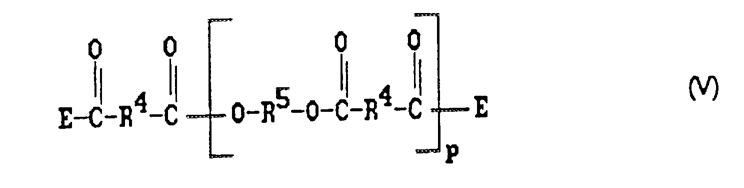 where R⁴ is on average 50-100 mol% o-, m- or p-phenylene, preferably m- or p-phenylene,
and 0-50 mol% straight-chain or branched alkylene of 1-6, preferably 3-6, carbon atoms and/or cyclohexylene radicals,
R⁵ is on average 30-100 mol% radicals of the formula VI 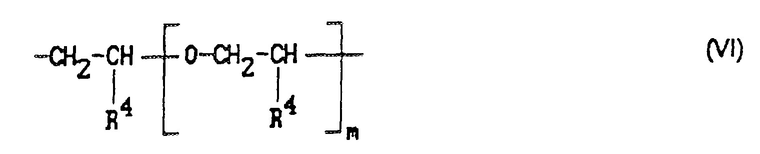 where R⁴ is hydrogen or methyl and m is 1 or 2,
and 0-70 mol% alkylene radicals of 2-6 carbon atoms and/or radicals of the formula VII 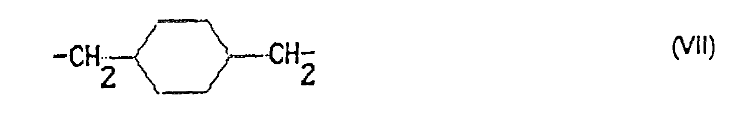 and 0-20 mol% of polyoxyalkylene radicals of the formula IV where R⁴ is hydrogen or methyl and m is a number corresponding to an average molecular weight of the polyoxyalkylene radical of up to 2000,
E is hydroxyl, alkoxy of 1-4 carbon atoms or the radical -O-R-OH, and
n is such that the second polyester has a melt index of 110-130°C.

2. The recyclable carpet floor covering of claim 1, wherein the consolidating and adhering composition comprises a combination of
15-30% by weight of a water-soluble or -dispersible first polyester A, and
85-70% by weight of a water-insoluble second polyester B.

3. The recyclable carpet floor covering of at least one of claims 1 and 2, wherein the weight proportions of pile material, primary backing and consolidating and adhering composition of the carpet floor covering are from about 150 to 2000 g/m of pile material, from 80 to 200 g/m of primary backing and from 20 to 800 g/m of consolidating and adhering composition.

4. The recyclable carpet floor covering of at least one of claims 1 to 3, wherein the primary backing has a thread density corresponding to from about 60 to 150 warp threads and from 80 to 165 filling threads per 10 cm.

5. The recyclable carpet floor covering of at least one of claims 1 to 4 having a tufted construction in which the primary backing is a polyester nonwoven or a polyester weave, preferably with a basis weight from 80 to 200 g/m.

6. The recyclable carpet floor covering of at least one of claims 1 to 5, wherein the secondary backing comprises a polyester nonwoven having a basis weight from 20 to 450 g/m, in particular a nonwoven composed of staple or continuous filament fibers from 2.0 to 30 dtex, preferably from 3.0 to 8.0 dtex in linear density and consolidated by needling, autogenously thermally or hot-melt adhesive, for example a spunbonded.

7. The recyclable carpet floor covering of at least one of claims 1 to 6, wherein the fibers are made of a polyester material that is at least 85 mol% polyethylene terephthalate.

8. A preparation of a polyester-based consolidating and adhering composition for back consolidation of recyclable polyester carpets and/or for adhering the same to a secondary backing, of the following composition:
from 10 to 70 parts by weight of a water-soluble or readily water-dispersible polyester A
GW parts by weight of water, GW being given by the formula
GP·0.66 ≤ GW ≤ GP·5.0, wherein GP is the amount of polyester A in parts by weight,
GL parts by weight of a water-miscible organic solvent,
GL being given by the formula 0 ≤ GL ≤ 0.3·GP, from 90 to 30 parts by weight of a water-insoluble polyester B,
where the polyesters A and B have the compositions specified in claim 1.

9. The preparation of claim 8 comprising
from 15 to 30 parts by weight of a water-soluble or readily water-dispersible polyester A,
GW parts by weight of water, GW being given by the formula
GP·0.66 ≤ GW ≤ GP·5.0, wherein GP is the amount of polyester A in parts by weight,
GL parts by weight of a water-miscible organic solvent,
GL being given by the formula 0 ≤ GL ≤ 0.3·GP, and
from 85 to 70 parts by weight of a water-insoluble polyester B.

10. The use of the preparation of claims 8 and 9 for consolidating carpet floor coverings and optionally for adhering a secondary backing.

11. A process for producing a recyclable carpet floor covering by first using one of the known knotting, weaving, warp-knitting, tufting or needlefelt processes to produce from polyester yarns an unconsolidated carpet floor covering comprising a backing and tied-in pile yarns, cropping, if a velour material is to be produced, optionally coloring in a conventional manner and then washing to remove existing spin finishes, which comprises then applying from the back by spraying, brushing or foaming, with or without the addition of a foamer to the preparation, but preferably by kiss roll padding or knife-coating a consolidating and adhering preparation of the following composition:
from 10 to 70 parts by weight of a water-soluble or readily water-dispersible polyester A
GW parts by weight of water, GW being given by the formula
GP·0.66 ≤ GW ≤ GP·5.0, wherein GP is the amount of polyester A in parts by weight,
GL parts by weight of a water-miscible organic solvent,
GL being given by the formula 0 ≤ GL ≤ 0.3·GP, from 90 to 30 parts by weight of a water-insoluble polyester B,
where the polyesters A and B have the compositions specified in claim 1,
the amount applied of preparation being adjusted in such a way as to produce, based on solids, a polyester add-on from 20 to 800 g/m,
after the polyester preparation has been applied to the back of the carpet optionally applying a secondary backing and pressing it on, for example by calendering, and
then drying the carpet at temperatures from 80 to 140°C, the polyester resin of the polyester preparation being bound completely into the carpet backing either in the course of the drying operation or in a subsequent heat treatment step at 140-180°C to end-consolidate the carpet backing.

12. The process of claim 11, wherein the consolidating and adhering preparation applied has the following composition:
from 15 to 30 parts by weight of a water-soluble or readily water-dispersible polyester A,
GW parts by weight of water, GW being given by the formula
GP·0.66 ≤ GW ≤ GP·5.0, wherein GP is the amount of polyester A in parts by weight,
GL parts by weight of a water-miscible organic solvent,
GL being given by the formula 0 ≤ GL ≤ 0.3·GP, and
from 85 to 70 parts by weight of a water-insoluble polyester B.

13. The process of at least one of claims 11 and 12, wherein the rearward application of the polyesters A and B is carried out in separate steps, polyester A being applied in the form of a solution or dispersion and polyester B in powder form.

## Revendications

1. Moquette recyclable composée d'un support, d'un filés de poils lié à celui-ci et d'un apprêt de dossier, et est caractérisée en ce que le filé de poils, le support et éventuellement le deuxième dossier sont constitués de fibres polyester et en ce que pour l'apprêt du dossier et éventuellement pour le collage avec le deuxième dossier, elle contient un agent de consolidation et d'adhésion, composé d'une combinaison (solide calculé au solide)
de 10 à 70 % en poids d'un premier polyester A soluble ou dispersable dans l'eau et
de 90 à 30 % en poids d'un deuxième polyester B insoluble dans l'eau,
le polyester A soluble ou dispersable dans l'eau répondant à la formule I : 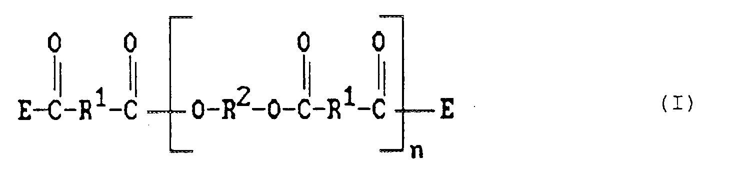 dans laquelle R¹ représente, en moyenne statistique,
de 25 à 90 % en moles de o-, m- ou p-phénylène, de préférence de m- ou de p-phénylène,
de 10 à 25 % en moles de groupes de formules II ou III : 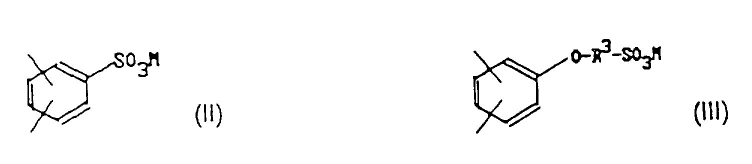 où R³ représente o-, m- ou p-phénylène ou alkylène linéaire ou ramifié avec de 2 à 6, de préférence de 2 à 4, plus particulièrement de 3 atomes de carbone, et
de 0 à 50 % en moles d'alkylène linéaire ou ramifié avec 1 à 6, de préférence de 3 à 6 atomes de carbone et/ou de radicaux de cyclohexylène,
R, dans la moyenne statistique, est de 50 à 100 % en moles de résidus de formule IV : 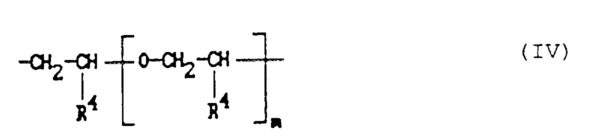 où R⁴ représente l'hydrogène ou méthyle et m vaut 1 ou 2,
de 0 à 50 % en moles de radicaux alkylènes avec 2 à 6 atomes de carbone et
de 0 à 20 % en moles de radicaux polyoxyalkylènes de formule IV, où R⁴ représente l'hydrogène ou méthyle et m correspond à un nombre représentant un poids moléculaire moyen du radical polyoxyalkylène allant jusqu'à 2000,
E représente hydroxy, alcoxy avec 1 à 4 atomes de carbone ou le radical -O-R-OH et
M représente l'hydrogène ou un atome de lithium, de sodium ou de potassium ou un groupe ammonium et
n est tellement grand que le poids moléculaire moyen apparent, mesuré dans un osmomètre à pression de vapeurs, dans du diméthylformamide comme solvant, a une valeur de 1000 à 12 000, de préférence de 1000 à 5000,
et
de polyester B insoluble dans l'eau correspondant à la formule V : 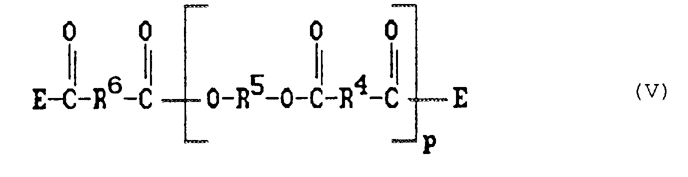 où R⁶, dans la moyenne statistique, est de 50 à 100 % en mole de o-, m- ou p-phénylène, de préférence de m- ou de p-phénylène,
et de 0 à 50 % en moles d'alkylène linéaire ou ramifié avec 1 à 6, de préférence avec 3 à 6, atomes de carbone et/ou de radicaux cyclohexylènes,
R⁵, dans la moyenne statistique, est de 30 à 100 % en moles de radicaux de formule VI : 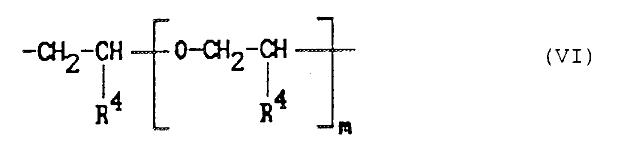 où R⁴ représente l'hydrogène ou méthyle et m vaut 1 ou 2,
et de 0 à 70 % en moles de radicaux alkylènes avec 2 à 6 atomes de carbone et/ou de radicaux de formule VII : 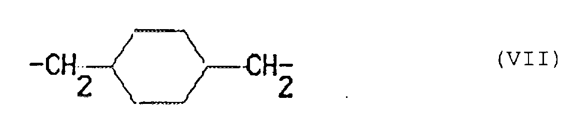 de 0 à 20 % en moles de radicaux polyoxyalkylènes de formule IV, où R⁴ représente l'hydrogène ou méthyle et m est un nombre correspondant à un poids moléculaire moyen du radical polyoxyalkylène allant jusqu'à 2000,
E représente hydroxyle, alcoxy avec 1 à 4 atomes de carbone ou le radical -O-R⁻OH et
p est tellement grand que le deuxième polyester a un indice de fusion de 110 à 130 °C.

2. Moquette recyclable selon la revendication 1, caractérisée en ce qu'elle contient un agent de consolidation et d'encollage composé d'une combinaison
de 15 à 30 % en poids d'un premier polyester A dispersable ou soluble dans l'eau et
de 85 à 70 % en poids d'un deuxième polyester B insoluble dans l'eau.

3. Moquette recyclable selon au moins l'une des revendications 1 et 2, caractérisée en ce que les parties pondérales en matière de poils, en support et en agent de consolidation et d'encollage de la moquette sont d'environ 150 à 2000 g/m de matière de poils, de 80 à 200 g/m de support et de 20 à 800 g/m d'agent de consolidation et d'encollage.

4. Moquette recyclable selon au moins l'une des revendications 1 et 3, caractérisée en ce que le support présente une densité de fils correspondant à environ 60 à 150 fils de chaîne et de 80 à 165 fils de trame pour 10 cm.

5. Moquette recyclable selon au moins l'une des revendications 1 et 4, caractérisée en ce qu'elle présente une construction tuftée, le support étant une nappe non tissée polyester ou un tissu polyester, de préférence ayant un poids surfacique de 80 à 200 g/m.

6. Moquette recyclable selon au moins l'une des revendications 1 et 5, caractérisée en ce qu'elle présente un deuxième dossier composé d'une nappe non tissée polyester ayant un poids surfacique de 20 à 450 g/m, plus particulièrement d'une nappe non tissée en fibres coupées ou continues ayant un titre de 2,0 à 30 dtex, de préférence de 3,0 à 8,0 dtex, consolidée par aiguilletage, un procédé autogène thermique ou à l'aide d'une colle à fusion, comme par exemple un Spunbond.

7. Moquette recyclable selon au moins l'une des revendications 1 à 6, caractérisée en ce que ses fibres sont constituées d'une matière polyester qui se compose d'au moins 85 % en moles de téréphtalate de polyéthylène.

8. Préparation d'un agent de consolidation et d'encollage à base de polyesters pour la consolidation du dossier du tapis polyester recyclable et/ou pour l'encollage de celui-ci d'un deuxième dossier ayant la composition suivante :
de 10 à 70 % en poids d'un polyester A soluble ou facilement dispersable dans l'eau,
GW parties en poids d'eau, GW étant obtenu à partir de la formule
GP·0,66 ≤ GW ≤ GP·5,0,
où GP est la quantité en parties en poids du polyester A,
GL parties en poids d'un solvant organique miscible à l'eau, GL étant obtenu à partir de la formule
0 ≤ GL ≤ 0,3·GP,
de 90 à 30 % en poids d'un polyester B insoluble dans l'eau
et les polyesters A et B ayant les compositions données dans la revendication 1.

9. Préparation selon la revendication 8, caractérisée en ce qu'elle contient :
de 15 à 30 % en poids d'un polyester A soluble ou facilement dispersable dans l'eau,
GW parties en poids d'eau, GW étant obtenu à partir de la formule
GP·0,66 ≤ GW ≤ GP·5,0,
où GP est la quantité en parties en poids du polyester A,
GL parties en poids d'un solvant organique miscible à l'eau, GL étant obtenu à partir de la formule
0 ≤ GL ≤ 0,3·GP,
de 85 à 70 % en poids d'un polyester B insoluble dans l'eau.

10. Utilisation de la préparation des revendications 8 et 9, pour la consolidation de moquettes et, éventuellement, pour l'encollage avec un deuxième dossier.

11. Procédé pour la préparation d'une moquette recyclable en préparant d'abord à l'aide d'un procédé de nouage, de tissage, de tricotage, de tuftage ou d'aiguilletage connu, en utilisant des filés polyesters, une moquette non consolidée composée d'un support et de files de poils liés à celui-ci, dans la mesure où on doit préparer une moquette velours, on rase, éventuellement on teint de façon usuelle et on lave ensuite pour éliminer des avivages de filage éventuellement présents, caractérisé en ce que l'on applique ensuite sur le dossier par un procédé par pulvérisation, par brossage ou par moussage, éventuellement en ajoutant un agent moussant à la préparation, mais de préférence par foulardage à l'aide de rouleaux de foulardage, ou à la racle, une préparation d'agent consolidant et d'encollage qui présentent la composition suivante :
de 10 à 70 % en poids d'un polyester A soluble ou facilement dispersable dans l'eau,
GW parties en poids d'eau, GW étant obtenu à partir de la formule
GP·0,66 ≤ GW ≤ GP·5,0,
où GP est la quantité en parties en poids du polyester A,
GL parties en poids d'un solvant organique miscible à l'eau, GL étant obtenu à partir de la formule
0 ≤ GL ≤ 0,3·GP,
de 90 à 30 % en poids d'un polyester B insoluble dans l'eau
et les polyesters A et B ayant la composition donnée dans la revendication 1,
la quantité appliquée de la préparation étant établie de façon telle que, par rapport à la matière solide, on obtienne un dépôt de polyester de 20 à 800 g/m,
après le dépôt de la préparation polyester sur le dossier du tapis, on dépose par compression éventuellement un deuxième dossier et par exemple par calandrage et
ensuite on sèche le tapis à des température de 80 à 140 °C et la résine polyester de la préparation de polyesters est liée complètement soit au cours du séchage, soit dans une étape consécutive du traitement thermique à 140 à 180 °C, et ce faisant, celui-ci est consolidé définitivement.

12. Préparation selon la revendication 11, caractérisée en ce que l'on applique une préparation d'agent de consolidation et d'agent d'encollage ayant la composition suivante :
de 15 à 30 % en poids d'un polyester A soluble ou facilement dispersable dans l'eau,
GW parties en poids d'eau, GW étant obtenu à partir de la formule
GP·0,66 ≤ GW ≤ GP·5,0,
où GP est la quantité en parties en poids du polyester A,
GL parties en poids d'un solvant organique miscible à l'eau, GL étant obtenu à partir de la formule
0 ≤ GL ≤ 0,3·GP,
de 85 à 70 % en poids d'un polyester B insoluble dans l'eau.

13. Procédé selon au moins l'une des revendications 11 et 12, caractérisé en ce que l'application sur le dossier des polyesters A et B est effectuée en étapes séparées, le polyester A étant appliqué sous forme d'une solution ou d'une dispersion, le polyester B sous forme pulvérulente.
